# EUROPEAN PATENT APPLICATION

(11) **EP 0 953 861 A2**
(43) Date of publication of application: **03.11.1999**
(21) Application number: 98122980.0
(22) Date of filing: 03.12.1998
(51) Int. Cl.: G02B 26/10

(54) **Method and apparatus for doubling a CCD's resolution using a gated shifted optical path**

(30) Priority: 29.04.1998 US 69683
(71) Applicant: HEWLETT-PACKARD COMPANY, Palo Alto, California 94304-1181 (US)
(72) Inventor: Story, Roger D., Fort Collins, CO 80525 (US)
(74) Representative: Schoppe, Fritz, Dipl.-Ing.

(57) **Abstract**

An optical image scanner that is able to double the resolution of the linear photosensor array (100) by shifting two halves (130, 132) of the scan line (114) image onto the same linear photosensor array (100), such that by means of a mechanical or electrical gate assembly (112) or a spinning mirror assembly (106, 108), one half (130) of the scan line (114) is scanned and then the other half (132) of the scan line (114) is scanned. Alternatively, the gate assembly (112) could be continually toggled during a single scanning procedure, such that both halves (130, 132) of the scan line (114) are continually scanned during the same scanning procedure at a predetermined sampling rate for both sides. Finally, firmware would stitch the two halves (130, 132) of the scan line (114) back together to produce the final doubled scan line image.

## Description

### FIELD OF THE INVENTION

The present invention relates generally to the field of optical scanners and more particularly to an optical scanner in which the CCD resolution is doubled by a gated shifting of the optical path.

### BACKGROUND OF THE INVENTION

Optical scanners produce machine readable data which is representative of a scanned object, e.g., a page of printed text. Most optical scanners employ line-focus systems in which light from an illuminated scan line on the object is imaged by a lens onto a linear photosensor array or detector positioned remotely from the object. The linear photosensor array is typically a single dimension array of photoelements, such as a CCD array, that correspond to small area locations along the illuminated scan line. These small area locations are commonly referred to as "picture elements" or "pixels". Each photoelement produces a data signal that is representative of the intensity of light from the corresponding pixel. The data signals from the photoelements are received and processed by an appropriate data processing system which may subsequently store the data on a suitable medium or generate a display signal therefrom for reproducing an image of the object with a display device such as a CRT or a printer.

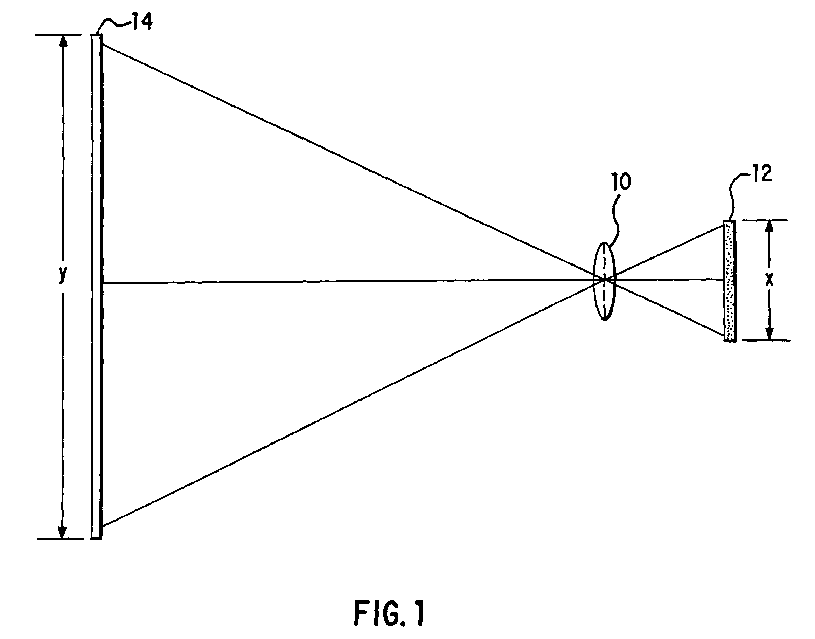

Generally, the resolution "Y" of the scan line 14 is directly dependent on the resolution "X" of the CCD array 12, as shown in Figure 1. Thus, increasing the resolution "Y" of the scan line 14, requires increasing the resolution "X" of the CCD array 12. This is a very expensive prospect as doubling a CCD array is quite expensive. Also, generally with a flat bed scanner, the scanner optics scan while moving in one direction and then return to a starting position without performing a scan in the opposite direction. It would be advantageous to have a scanner with increased resolution without increasing the size of the CCD array. It would be a further advantage for a flat bed scanner to be able to scan while the optics are moving in a first direction and then scan again while the optics move back to the starting position.

### SUMMARY OF THE INVENTION

The above and other aspects of the present invention are accomplished in a scanner that utilizes two sets of mirrors to divide the scan line in half and a gate to double the resolution of the scan line from approximately a 600 pixel scan line to approximately a 1200 pixel scan line without increasing the size of the CCD array. A further embodiment would permit the scanner to scan half of the scan line in one direction, toggle the gates to the mirrors and then scan the second half of the scan line as the scanner optics move in the opposite direction. Finally, firmware will stitch the two halves of the image to produce the final doubled image. The advantages of the present invention include, doubling the resolution of current and future CCD arrays, fixed mirrors make the optics more stable and easy to manufacture, minor increase over the material cost and double the resolution over existing designs, and compatible with existing manufacturing processes. The above and other objects, features and advantages of the present invention will be better understood by reading the following more particular description of the invention, presented in conjunction with the following drawings with like numbers representing like elements.

### BRIEF DESCRIPTION OF THE DRAWINGS

Figure 1 shows a top view of basic scanner optics according to the prior art;

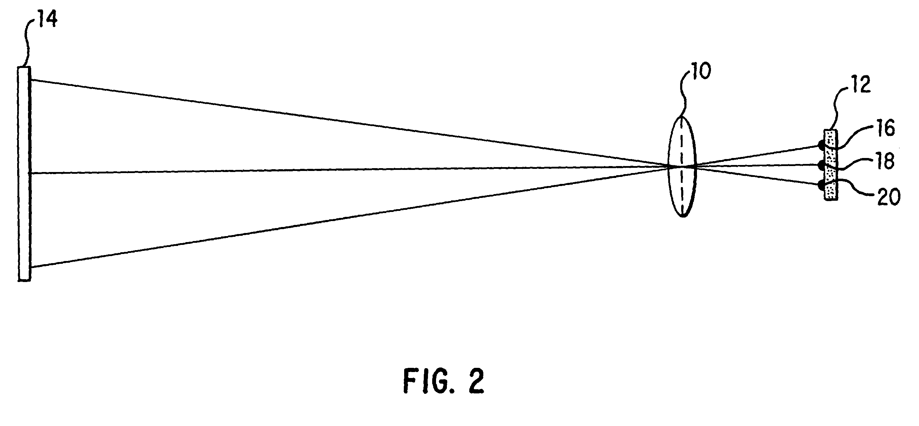

Figure 2 shows a side view of basic scanner optics according to the prior art;
Figure 3 shows a top view of basic scanner optics according to a first embodiment of the present invention;
Figure 4 shows a side view of basic scanner optics according to the first embodiment of the present invention;
Figure 5 shows a top perspective view of basic scanner optics according to the first embodiment of the present invention;
Figure 6 shows a side perspective view of basic scanner optics according to the first embodiment of the present invention;
Figure 7 shows a top view of basic scanner optics according to a second embodiment of the present invention;
Figure 8 shows a side view of basic scanner optics according to the second embodiment of the present invention;
Figure 9 shows a top perspective view of basic scanner optics according to the second embodiment of the present invention; and
Figure 10 shows a side perspective view of basic scanner optics according to the second embodiment of the present invention.

### DETAILED DESCRIPTION OF THE PREFERRED EMBODIMENT

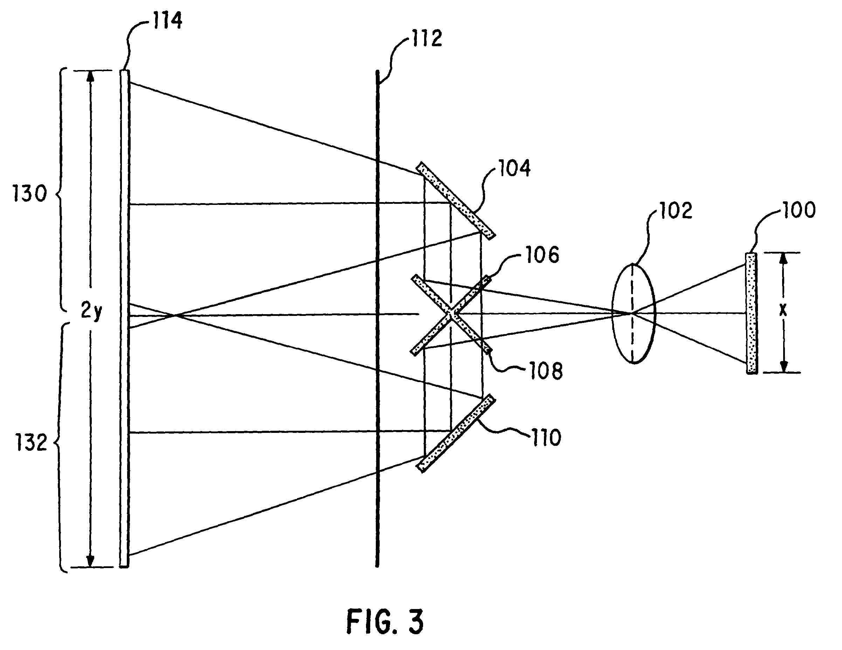

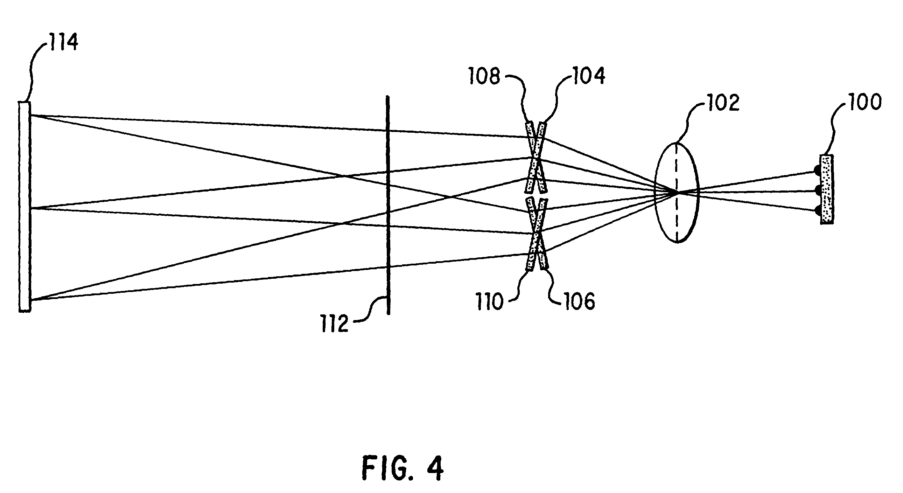

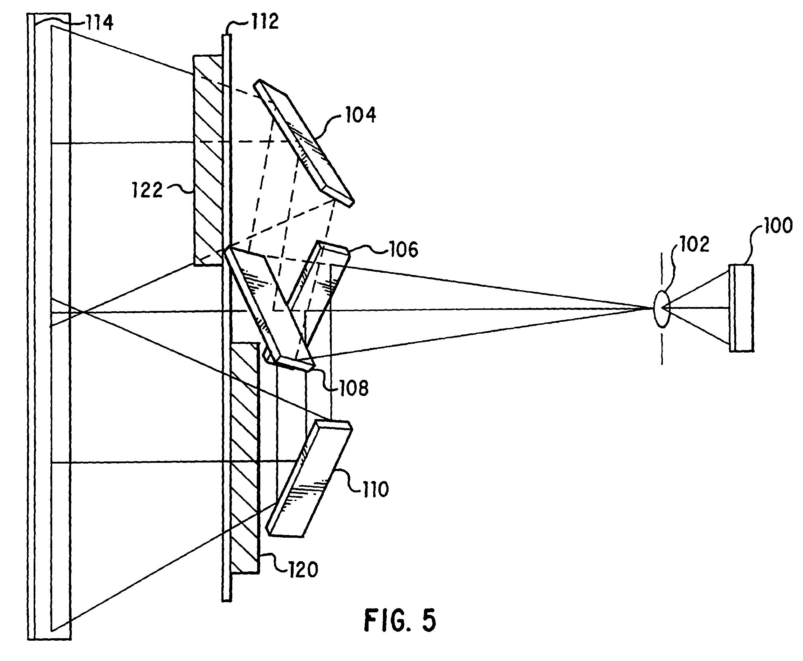

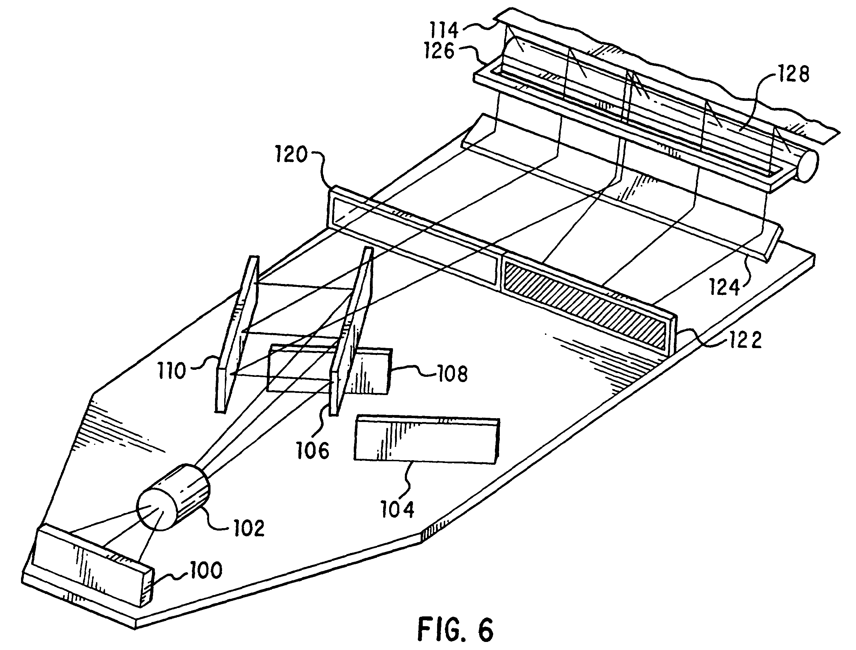

Figures 3-6 illustrate a first embodiment of the basic optics of a CCD resolution doubler according to the present invention. Specifically, the resolution of the scan line 114 is doubled 2Y by the use of two sets of mirrors and gates. A first half 130 of scan line 114 is reflected onto mirror 104, which is tilted to reflect the image onto mirror 108, which is tilted to reflect the image through lens 102 and onto the CCD array 100. A second half 132 of scan line 114 is reflected onto mirror 110, which is tilted to reflect the image onto mirror 106, which is tilted to reflect the image through lens 102 and onto the CCD array 100.

Gate 112 comprises two separate gates or shutters 120 and 122 that alternately block the two halves of the scan line aperture 114. When one of gates 120 and 122 allows the image from the scan line 114 to pass, the other gate does not permit the image from the scan line 114 to pass through. Gates 120 and 122 may be mechanical gates or shutters that are alternately toggled or they may be electrical shutters similar to those used in 3D glasses or LCDs (liquid crystal displays). A mechanical gate system would probably be cheaper to manufacture, but there would likely be greater reliability problems due to wear and tear over time. Also, the time for mechanical gates to toggle is probably much greater than that for electrical gates. An electrical gate on the other hand would most likely have a greater initial materials cost with subsequent improved reliability. An electrical gate system would also allow the toggling between gates to occur at a faster rate.

Although gates 120 and 122 are shown between the scan line 114 and mirrors 104-110, gate 120 could be between mirror 110 and mirror 106 and gate 122 could be between mirror 104 and mirror 108. In another embodiment, there could be no gates, but rather a spinning mirror assembly with a small motor in place of mirrors 106 and 108 with the mirror assembly alternating between forwarding the image from mirror 104 through lens 102 and forwarding the image from mirror 110 through lens 102 and onto CCD array 100. It should be noted that the aperture for the first half of the scan line 130 and the second half of the scan line 132 should preferably overlap by approximately 3 or 4 pixels in order to permit the firmware to stitch the final image back together.

There are two possible modes of operation. The first mode of operation is to scan one side of the scan line 114 as the optical carriage moves in one direction, toggle the shutters, and then to scan the second side of the scan line 114 as the optical carriage returns to the home position, at which point the shutters would be returned to the starting or home position. This mode of operation would work equally well for either the mechanical shutter assembly, the electrical (LCD) shutter assembly, or the spinning mirror assembly.

The second mode of operation is to do both scans in one direction with the shutter 114 toggling between gates 120 and 122 to permit a predetermined sampling rate for either side of the shutter 114. Due to the speed of gating required, the electrical (LCD) gate assembly would work the best for this mode of operation. However, a small shutter assembly or spinning mirror assembly may also work for this mode of operation.

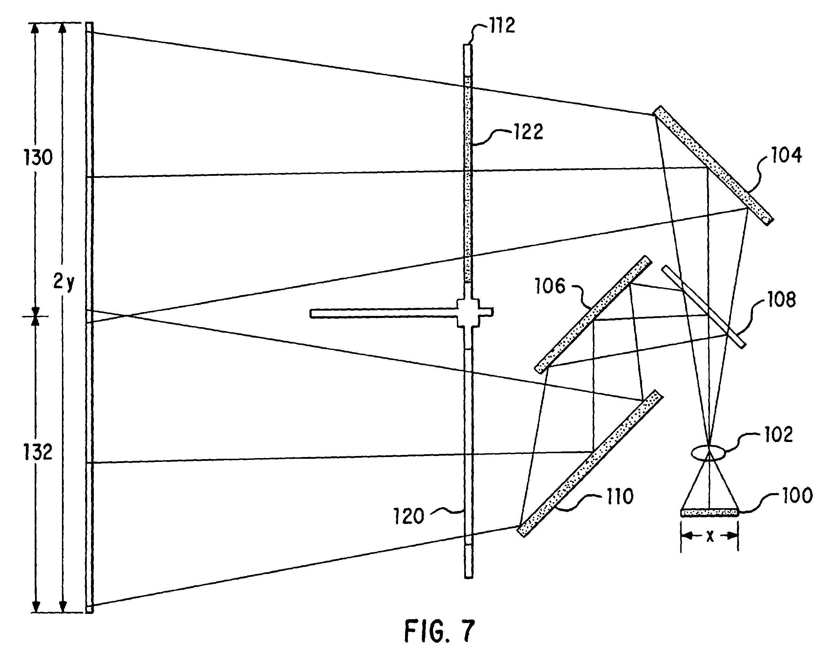

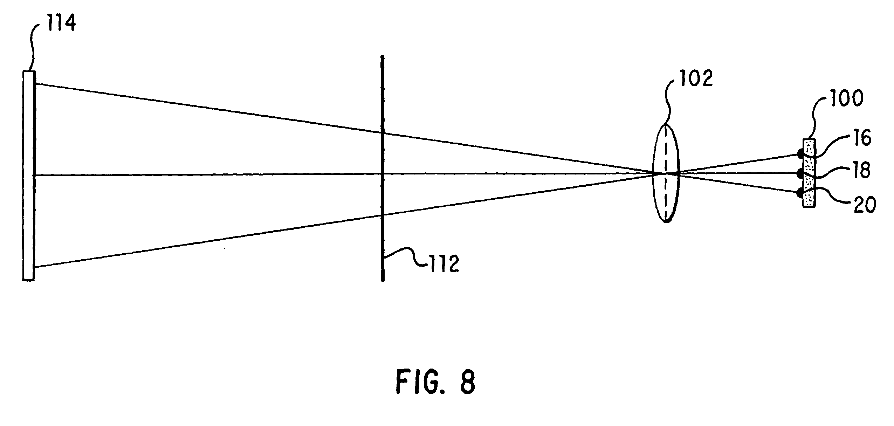

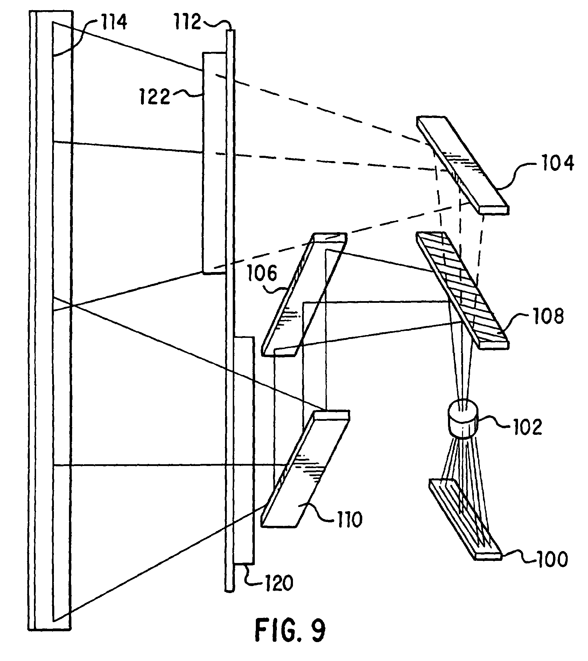

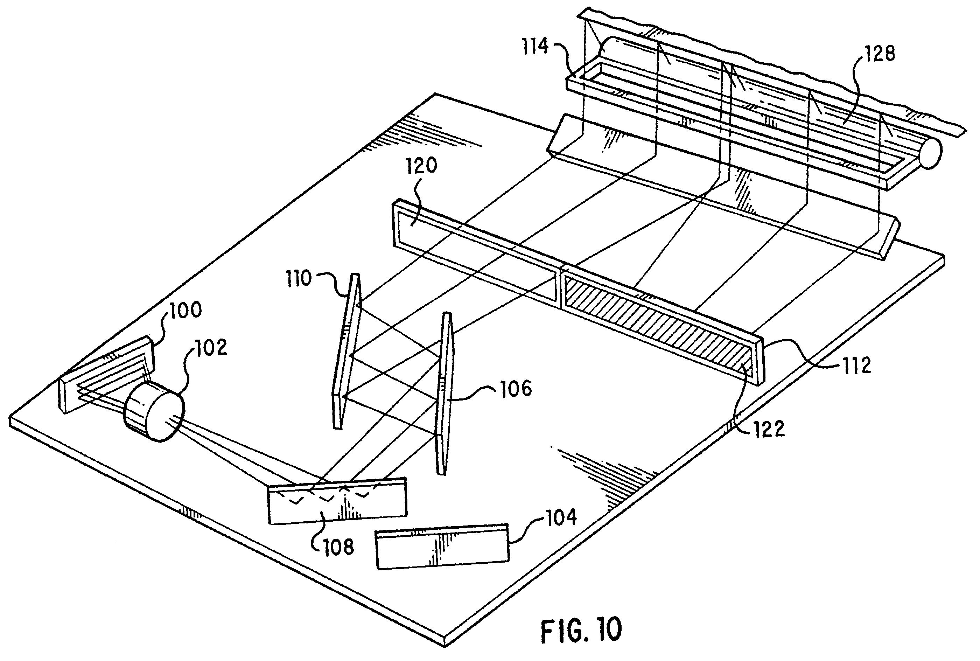

Figures 7-10 illustrate a second embodiment of the basic optics of a CCD resolution doubler according to the present invention. Specifically, the resolution of the scan line 114 is doubled 2Y by the use of two sets of mirrors and gates. A first half 130 of scan line 114 is reflected onto mirror 104, which is tilted to reflect the image through beamsplitting mirror 108 and through lens 102 and onto the CCD array 100. A second half 132 of scan line 114 is reflected onto mirror 110, which is tilted to reflect the image onto mirror 106, which is tilted to reflect the image onto beamsplitting mirror 108, which is tilted to reflect the image through lens 102 and onto the CCD array 100.

Gate 112 comprises two separate gates or shutters 120 and 122 that alternately block the two halves of the scan line aperture 114. When one of gates 120 and 122 allows the image from the scan line 114 to pass, the other gate does not permit the image from the scan line 114 to pass through. Gates 120 and 122 may be mechanical gates or shutters that are alternately toggled or they may be electrical shutters similar to those used in 3D glasses or LCDs (liquid crystal displays). A mechanical gate system would probably be cheaper to manufacture, but there would likely be greater reliability problems due to wear and tear over time. Also, the time for mechanical gates to toggle is probably much greater than that for electrical gates. An electrical gate on the other hand would most likely have a greater initial materials cost with subsequent improved reliability. An electrical gate system would also allow the toggling between gates to occur at a faster rate.

Although gates 120 and 122 are shown between the scan line 114 and mirrors 104-110, gate 120 could be between mirror 110 and mirror 106 and gate 122 could be between mirror 104 and beamsplitting mirror 108. In another embodiment, there could be no gates, but rather a spinning mirror assembly with a small motor in place of mirror 108 with the mirror assembly alternating between forwarding the image from mirror 104 through lens 102 and forwarding the image from mirror 106 through lens 102 and onto CCD array 100. It should be noted that the aperture for the first half of the scan line 130 and the second half of the scan line 132 should preferably overlap by approximately 3 or 4 pixels in order to permit the firmware to stitch the final image back together.

There are two possible modes of operation. The first mode of operation is to scan one side of the scan line 114 as the optical carriage moves in one direction, toggle the shutters, and then to scan the second side of the scan line 114 as the optical carriage returns to the home position, at which point the shutters would be returned to the starting or home position. This mode of operation would work equally well for either the mechanical shutter assembly, the electrical (LCD) shutter assembly, or the spinning mirror assembly.

The second mode of operation is to do both scans in one direction with the shutter 114 toggling between gates 120 and 122 to permit a predetermined sampling rate for both sides of the shutter 114. Due to the speed of gating required, the electrical (LCD) gate assembly would work the best for this mode of operation. However, a small shutter assembly or spinning mirror assembly may also work for this mode of operation.

The foregoing description of the present invention has been presented for purposes of illustration and description. It is not intended to be exhaustive or to limit the invention to the precise form disclosed, and other modifications and variations may be possible in light of the above teachings. For example, the concepts of the present invention may be equally applicable to copiers, cameras, and the like. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. An optical image scanner having a linear photosensor array (100) and a scan line (114), said optical image scanner comprising:
a lens assembly (102);
a first group of mirrors (104, 108) for reflecting an image from a first portion (130) of said scan line (114) onto said lens assembly (102);
a second group of mirrors (106, 110) for reflecting an image from a second portion (132) of said scan line (114) onto said lens assembly (102); and
a shutter assembly (112), wherein said shutter assembly (112) alternately permits an image from said first portion (130) of said scan line (114) to be reflected through either said first group of mirrors (104, 108) through said lens assembly (102) and onto said linear photosensor array (100) or an image from said second portion (132) of said scan line (114) to be reflected through said second group of mirrors (106, 110), through said lens assembly (102) and onto said linear photosensor array (100).

2. The optical image scanner according to claim 1 wherein said shutter assembly (112) comprises a mechanical shutter assembly.

3. The optical image scanner according to claim 1 wherein said shutter assembly (112) comprises an electrical shutter assembly.

4. The optical image scanner according to claim 3 wherein said electrical shutter assembly (112) comprises a liquid crystal display shutter assembly.

5. The optical image scanner according to claim 1 further comprising firmware for recreating the scan line (114) by stitching the image from said first portion (130) of said scan line (114) and the image from said second portion (132) of said scan line (114) back together after a scan has been completed.

6. An optical image scanner having a linear photosensor array (100) and a scan line (114), said optical image scanner comprising:
a lens assembly (102);
a first mirror (104) for reflecting an image from a first portion (130) of said scan line (114) onto said lens assembly (102);
a second mirror (110) for reflecting an image from a second portion (132) of said scan line (114) onto said lens assembly (102); and
a spinning mirror assembly (106, 108), wherein said spinning mirror assembly (106, 108) alternately permits an image from said first portion (130) of said scan line (114) to be reflected through either said first mirror (104) through said lens assembly (102) and onto said linear photosensor array (100) or an image from said second portion (132) of said scan line (114) to be reflected through said second mirror (110) through said lens assembly (102) and onto said linear photosensor array (100).

7. A method for scanning an optical image along a scan line (114), said method comprising:
a shutter assembly means (112) alternatively permitting an image from a first portion (130) of the scan line (114) to be reflected through a first group of mirrors (104, 108) and onto a linear photosensor array (100) and permitting an image from a second portion (132) of the scan line (114) to be reflected through a second group of mirrors (106, 110) and onto a linear photosensor array (100); and
firmware recreating the scan line (114) by stitching the image from the first portion (130) of the scan line (114) back together with the image from the second portion (132) of the scan line (114).
